# EUROPEAN PATENT APPLICATION

(11) **EP 3 855 612 A1**
(43) Date of publication of application: **28.07.2021**
(21) Application number: 20827999.2
(22) Date of filing: 16.11.2020
(51) Int. Cl.: H02M 3/158

(54) **MULTI-LEVEL BOOST CIRCUIT, AND APPARATUS AND SYSTEM THEREOF**

(30) Priority: 13.12.2019 CN 201911284545
(71) Applicant: Kehua Hengsheng Co., Ltd., Xiamen, Fujian 361000 (CN); Zhangzhou Kehua Technology Co., Ltd., Zhangzhou, Fujian 363000 (CN)
(72) Inventor: CHEN, Shusheng, Xiamen Fujian 361000 (CN); ZENG, Chunbao, Xiamen Fujian 361000 (CN); SU, Xianjin, Xiamen Fujian 361000 (CN)
(74) Representative: Petculescu, Ana-Maria
(86) International application number: PCT/CN2020/129025
(87) International publication number: WO 2021/115032

(57) **Abstract**

A multilevel boost circuit, a device and a system thereof are disclosed. A transient voltage suppressor is arranged between the output node, the first capacitor and the second diode. In combination with other auxiliary devices, the novel circuit not only solves the problem that the lower-arm switch is easily broken down at the power-on moment, but also solves the problem of breakdown of the second diode in the case of low input voltage, so that it is easier to select the related devices and reduce costs. Moreover, after introducing the corresponding devices, the normal boost process of the circuit is not affected, the voltage of the output end is easily controlled, and the probability of electric shocks is also reduced when operating the input end.

## Description

### TECHNICAL FIELD

The present invention relates to the technical field of boost circuits, and more particularly, to a multilevel boost circuit and a device and a system thereof.

### BACKGROUND

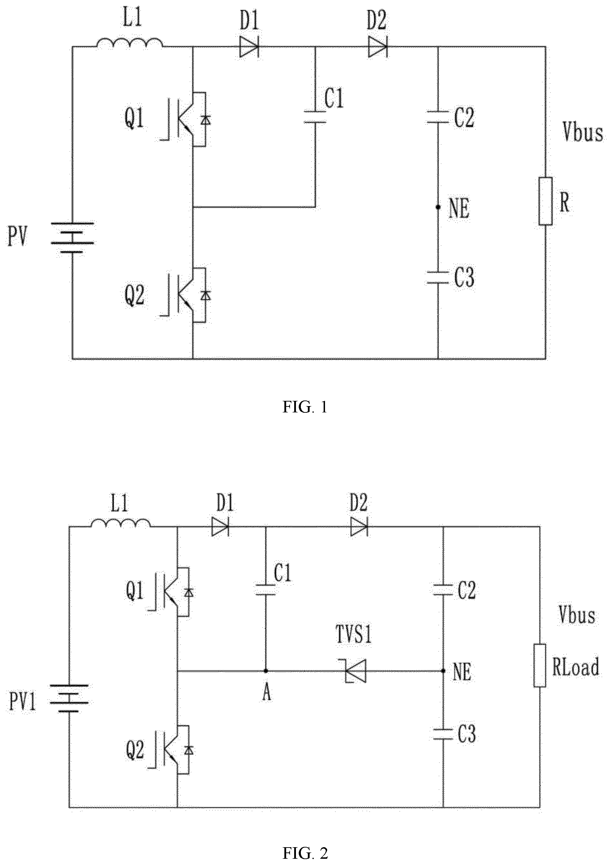

The input voltage of photovoltaic power generation systems is gradually increasing, and has thus far been increased to 1500 V. Because of expense or other factors, the front-stage boost circuit of the photovoltaic inverter is typically changed from a two-level circuit to a three-level circuit. As shown in FIG. 1, when the flying capacitor three-level boost circuit is initially powered on, the voltage on the flying capacitor C1 is zero. As a result, the lower-arm switch Q2 bears all the input voltage, which can easily cause damage to the switch Q2.

In addition, the above boost circuit also has another shortcoming. When it is used in the field of photovoltaic power generation and forms a distributed photovoltaic power generation system, there may be situations where a bus voltage is established because other parallel boost circuits have been powered on. In such situations, when the photovoltaic module PV shown in FIG. 1 has not been connected to the input end of the boost circuit or the voltage of the photovoltaic module PV is low, that is, in the case of low input voltage, the input voltage is lower than the starting voltage of the boost circuit. The bus voltage will react to the boost circuit; and as a result, the second diode D2 bears almost all the bus voltage, which can easily cause damage to the second diode D2.

Therefore, due to the above-mentioned shortcomings, the prior boost circuit in FIG. 1 has problems with selecting the switch Q2 and the second diode D2 or significant expense. Some proposed solutions help to solve these problems, but do not remedy them entirely.

For example, in order to solve the problem of the switch Q2, Chinese patent CN110299837A discloses a charging circuit, including an inductor, a capacitor and a controllable switch. The charging circuit precharges the flying capacitor C1 before the power-on moment to enable the voltage of the flying capacitor C1 to reach a safety threshold, thus reducing the voltage stress of the switch Q2 at the power-on moment. However, the charging circuit requires multiple devices thus adding expense. In order to solve the problem of the switch Q2 at a low cost, on the basis of FIG. 1, in another prior art, a diode is provided between the flying capacitor C1 and the neutral point NE of the output bus to ensure that the switch Q2 will not be broken down due to overvoltage during startup. However, during the normal operation of the boost circuit, the input voltage will be transferred to the neutral point NE of the output bus through the diode, which makes the voltage difficult to control and poses a risk of voltage bias.

In order to solve the problem of the second diode D2, on the basis of FIG. 1, in a prior art set up, a diode is provided between the neutral point NE of the output bus and the anode of the second diode, thereby loading the half-bus voltage to the anode of the second diode. As a result, the second diode need only bear the half-bus voltage in a case of low input voltage, and it is not easily broken down, even when experiencing a low withstanding voltage. However, during the normal operation of the boost circuit, when the lower-arm switch Q2 is turned on and the flying capacitor is in the charging cycle, the half-bus voltage charges the flying capacitor through the diode. This leads to the uneven voltage of the output capacitors and poses a risk of voltage bias. Additionally, the sudden change in the charging current can easily damage the diode. The voltage of the flying capacitor will deviate from the set value due to the abnormal charging loop and it is thus difficult to control.

Therefore, although the above solutions can solve the corresponding problems in the corresponding special situations, the newly added devices still affect the normal operation of the main devices, making it difficult to control the output of the boost circuit.

Furthermore, the above second solution also has the following problems: in the case of low input voltage, the half-bus voltage will be transferred to the input end through the diode, the flying capacitor C1 and the body diode of the switch Q1. Since the half-bus voltage may reach up to 750 V, an electric shock can occur when an operator operates the input end.

### SUMMARY

To solve the above-mentioned technical problems, an objective of the present invention is to provide a multilevel boost circuit and a device and a system thereof, which at least solves the problem that the lower-arm switch is easily broken down at the power-on moment and enables the bus voltage to be easily controlled without affecting the normal operation of the circuit.

In order to achieve the above-mentioned objective, according to the first aspect of the present invention, a multilevel boost circuit includes a first input end, a second input end, a first output end, a second output end, an inductor, a first controllable switch, a second controllable switch, a first capacitor, a first diode, a second diode, a first transient voltage suppressor and an output capacitor group.

The first controllable switch and the second controllable switch are connected in series to form a first branch, wherein a first end of the first controllable switch and a second end of the second controllable switch constitute a first end and a second end of the first branch, respectively.

The first diode and the second diode are connected in series to form a second branch, wherein the anode of the first diode and the cathode of the second diode constitute a first end and a second end of the second branch, respectively.

The first capacitor constitutes a third branch, and both ends of the first capacitor constitute a first end and a second end of the third branch, respectively.

The first transient voltage suppressor constitutes a fourth branch, and the cathode and the anode of the first transient voltage suppressor constitute a first end and a second end of the fourth branch, respectively.

The output capacitor group is connected between the first output end and the second output end, and the output capacitor group includes at least two output capacitors connected in series to form at least one output node configured as a common point between the output capacitors.

Each of the first end of the first branch and the first end of the second branch is connected to the first input end through the inductor. The second end of the first branch and the second end of the second branch are connected to the second input end and the first output end, respectively. The second input end is further connected to the second output end.

The first end of the third branch is connected to a common point of the first diode and the second diode in the second branch, and the second end of the third branch is connected to a common point of the first controllable switch and the second controllable switch in the first branch. The first end of the fourth branch is connected to the second end of the third branch, and the second end of the fourth branch is connected to one output node.

In an embodiment, the first transient voltage suppressor is a unidirectional transient voltage suppressor. The fourth branch is further provided with a third diode. The cathode of the third diode is connected to the cathode of the first transient voltage suppressor, and the anode of the third diode constitutes the first end of the fourth branch.

In an embodiment, the fourth branch is further provided with a second transient voltage suppressor. The anode of the second transient voltage suppressor is connected to the anode of the first transient voltage suppressor, and the cathode of the second transient voltage suppressor constitutes the second end of the fourth branch. Each of the first transient voltage suppressor and the second transient voltage suppressor is a unidirectional transient voltage suppressor.

In an embodiment, the first transient voltage suppressor is a bidirectional transient voltage suppressor, and both ends of the bidirectional transient voltage suppressor constitute the first end and the second end of the fourth branch, respectively.

In an embodiment, the multilevel boost circuit further includes a fifth branch, and a fourth diode is arranged on the fifth branch. The fifth branch is configured to clamp a voltage of the common point of the first diode and the second diode when an input voltage between the first input end and the second input end is lower than a starting voltage of the boost circuit. The cathode of the fourth diode is connected to the common point of the first diode and the second diode, and the anode of the fourth diode is connected to the second end of the fourth branch or a common point of the first transient voltage suppressor and the third diode.

In an embodiment, the fifth branch is further provided with a second transient voltage suppressor or a third controllable switch. When the fifth branch is provided with the second transient voltage suppressor, the anode of the second transient voltage suppressor is connected to the anode of the fourth diode, and the cathode of the second transient voltage suppressor is connected to the second end of the fourth branch or the common point of the first transient voltage suppressor and the third diode. When the fifth branch is provided with the third controllable switch, the third controllable switch is a normally closed relay, and the circuit further includes a controller, wherein the controller is configured to control the third controllable switch to be switched off during the normal operation of the circuit.

In an embodiment, the fourth branch is further provided with a third diode. The cathode of the third diode is connected to the cathode of the first transient voltage suppressor, and the anode of the third diode constitutes the first end of the fourth branch. The circuit further includes a fifth branch, and a fourth diode is arranged on the fifth branch. The fifth branch is configured to clamp a voltage of the common point of the first diode and the second diode when an input voltage between the first input end and the second input end is lower than a starting voltage of the boost circuit. The cathode of the fourth diode is connected to the common point of the first diode and the second diode, and the anode of the fourth diode is connected to a common point of the first transient voltage suppressor and the second transient voltage suppressor.

In an embodiment, the fourth branch is further provided with a third diode. The cathode of the third diode is connected to one end of the first transient voltage suppressor, and the anode of the third diode constitutes the first end of the fourth branch. The circuit further includes a fifth branch, and a fourth diode is arranged on the fifth branch. The fifth branch is configured to clamp a voltage of the common point of the first diode and the second diode when an input voltage between the first input end and the second input end is lower than a starting voltage of the boost circuit. The cathode of the fourth diode is connected to the common point of the first diode and the second diode, and the anode of the fourth diode is connected to a common point of the first transient voltage suppressor and the third diode.

In an embodiment, the fifth branch is further provided with a current limiting resistor, and the current limiting resistor is connected in series with the fourth diode.

In an embodiment, the output capacitor group includes two output capacitors with an identical capacitance value.

In order to achieve the above-mentioned objective, according to the second aspect of the present invention, an inversion device includes a post-stage inversion circuit and a front-stage circuit. The front-stage circuit employs the multilevel boost circuit mentioned in any one of the above technical solutions.

The multilevel boost circuit is configured to boost a voltage input from the input end of the multilevel boost circuit and then output the voltage via the output end of the multilevel boost circuit.

The input end of the inversion circuit is coupled to the output end of the multilevel boost circuit for inverting a direct current output from the output end of the multilevel boost circuit into an alternating current.

In order to achieve the above-mentioned objective, according to the third aspect of the present invention, a photovoltaic power generation device includes a photovoltaic module, a front-stage circuit and a post-stage circuit. The front-stage circuit employs the multilevel boost circuit mentioned in any one of the above technical solutions.

The photovoltaic module is in a one-to-one correspondence with the multilevel boost circuit and is coupled to the input end of the multilevel boost circuit. The multilevel boost circuit is configured to boost a voltage output from the photovoltaic module and then output the voltage via the output end of the multilevel boost circuit to the post-stage circuit.

In order to achieve the above-mentioned objective, according to the fourth aspect of the present invention, a photovoltaic power generation system includes at least two photovoltaic power generation devices mentioned in the above technical solution. Output ends of front-stage circuits of a plurality of photovoltaic power generation devices are connected in parallel and then connected to the post-stage circuit.

Compared with the prior art, the present invention has the following advantages.
(1) In the multilevel boost circuits of the embodiments of the present invention, a fourth branch with a first transient voltage suppressor is arranged between the output node and the second end of the third branch, and the voltage at both ends of the second controllable switch are controlled to be lower than the input voltage at the power-on moment, so that the second controllable switch is not easily broken down even when selected at a conventional cost. During the normal operation, the voltage of the second end of the third branch is generally not higher than the voltage of the output node connected to the first transient voltage suppressor, so that the voltage of the second end of the third branch will not be transferred to the output node. In this way, the fourth branch does not affect the even voltage of each output capacitor during the normal operation.
(2) In the multilevel boost circuits of the embodiments of the present invention, the fourth branch is further provided with a third diode or a second transient voltage suppressor or the first transient voltage suppressor, and the first transient voltage suppressor is configured as a bidirectional transient voltage suppressor, so as to prevent the voltage of the output node from being transferred to the output end through the first controllable switch in the case of low input voltage, thereby avoiding an electric shock.
(3) In the multilevel boost circuits of the embodiments of the present invention, when the clamp voltage of the fourth branch with the second transient voltage suppressor or with the first transient voltage suppressor configured as a bidirectional transient voltage suppressor cannot be selected to be higher than the voltage of the output node, a current limiting resistor or a third diode is further arranged on the fourth branch to limit the current level or ensure that the voltage of the output node is not transferred to the output end through the first controllable switch, thereby reducing the probability of electric shocks.
(4) In the multilevel boost circuits of the embodiments of the present invention, a fifth branch is further provided to clamp the voltage of the anode of the second diode at the voltage of the output node in the case of a low voltage, so as to protect the second diode from being broken down and facilitate its low-cost selection.
(5) In the multilevel boost circuits of the embodiments of the present invention, the fifth branch is further provided with a second transient voltage suppressor. In the case of low input voltage, the clamp voltage of the second transient voltage suppressor is selected at an appropriate value to enable the second transient voltage suppressor to be reversely conducted, so that the fifth branch can be conducted from the output node to the anode of the second diode and clamp the voltage of the anode of the second diode at an appropriate voltage value, so as to enable the voltage at both ends of the second diode to be lower than the withstanding voltage of the second diode. Therefore, at a conventional cost, the second diode can still be guaranteed not to be broken down, which is convenient for its low-cost selection. During the normal operation, the second transient voltage suppressor can prevent the output node from charging the first capacitor, and the output capacitors do not cause the problem of uneven voltage due to the introduction of the fifth branch.
(6) In the multilevel boost circuits of the embodiments of the present invention, when the fourth branch is already provided with a second transient voltage suppressor, only a fourth diode is necessarily provided on the fifth branch to ensure that the output capacitors do not cause the problem of uneven voltage due to the introduction of the fifth branch.
   The second transient voltage suppressor of the fourth branch is capable of blocking the voltage of the output node from being transferred to the second end of the third branch, and enabling the anode of the second diode to divide the voltage of the output node. Thus, the second transient voltage suppressor of the fourth branch plays a corresponding role in isolation or voltage protection. With the aid of the second transient voltage suppressor, the present invention can perfectly solve the problem of breakdown of the second controllable switch at the power-on moment, the problem of breakdown of the second diode in the case of low input voltage and the problem of even voltage of the output capacitors during the normal operation.
(7) In the multilevel boost circuits of the embodiments of the present invention, when the first transient voltage suppressor of the fourth branch is configured as a bidirectional transient voltage suppressor, only a fourth diode is necessarily provided on the fifth branch to ensure that the output capacitors do not cause the problem of uneven voltage due to the introduction of the fifth branch.
   The bidirectional transient voltage suppressor is directly provided on the fourth branch. When the bidirectional clamp voltage parameters meet the specific application requirements, the bidirectional transient voltage suppressor blocks the voltage of the output node from being transferred to the second end of the third branch, and enables the anode of the second diode to divide the voltage of the output node. Thus, the bidirectional transient voltage suppressor plays a corresponding role in isolation or voltage protection. Therefore, the bidirectional transient voltage suppressor simultaneously solves the problems of breakdown of the second controllable switch at the power-on moment and breakdown of the second diode in the case of low input voltage to meet the cost requirements for type selection. Additionally, the devices of the newly introduced fourth and fifth branches will not affect the even voltage of the output capacitors during the normal operation.
(8) By arranging the second transient voltage suppressor or configuring the first transient voltage suppressor as a bidirectional transient voltage suppressor, in the multilevel boost circuits of the invention, not only is the second diode prevented from being broken down in the case of low input voltage, but also the voltage of the anode of the second diode is reduced. Moreover, a current limiting resistor is further provided on the fifth branch to limit the current to a safe range, which reduces the probability of electric shock at the input end.

### BRIEF DESCRIPTION OF THE DRAWINGS

In order to more clearly illustrate the technical solutions of the embodiments of the present invention, the drawings used in the description of the embodiments are briefly introduced below. Obviously, the drawings described below are some embodiments of the present invention. For those having ordinary skill in the art, other drawings can be obtained according to these drawings without creative efforts.
FIG. 1 is a schematic diagram of the structure of a conventional flying capacitor three-level boost circuit;
FIG. 2 is a schematic diagram of the structure of a three-level boost circuit according to Embodiment 1 of the present invention;
FIG. 3 is a schematic diagram of the structure of a three-level boost circuit according to Embodiment 2 of the present invention;
FIG. 4 is a schematic diagram of the structure of a three-level boost circuit according to Embodiment 3 of the present invention;
FIG. 5 is a schematic diagram of the structure of a three-level boost circuit according to Embodiment 4 of the present invention;
FIG. 6 is a schematic diagram of the structure of a three-level boost circuit according to Embodiment 5 of the present invention;
FIG. 7 is a schematic diagram of the structure of a three-level boost circuit according to Embodiment 6 of the present invention;
FIG. 8 is a schematic diagram of the structure of a three-level boost circuit according to Embodiment 7 of the present invention;
FIG. 9 is a schematic diagram of the structure of a three-level boost circuit according to Embodiment 8 of the present invention;
FIG. 10 is a schematic diagram of the structure of a three-level boost circuit according to Embodiment 9 of the present invention;
FIG. 11 is a schematic diagram of the structure of a three-level boost circuit according to Embodiment 10 of the present invention;
FIG. 12 is a schematic diagram of the structure of a three-level boost circuit according to Embodiment 11 of the present invention;
FIG. 13 is a schematic diagram of the structure of a three-level boost circuit according to Embodiment 12 of the present invention;
FIG. 14 is a schematic diagram of the structure of a three-level boost circuit according to Embodiment 13 of the present invention;
FIG. 15 is a schematic diagram of the structure of a three-level boost circuit according to Embodiment 14 of the present invention;
FIG. 16 is a schematic diagram of the structure of a three-level boost circuit according to Embodiment 15 of the present invention;
FIG. 17 is a schematic diagram of the structure of an inversion device according to Embodiment 16 of the present invention;
FIG. 18 is a schematic diagram of the structure of a photovoltaic power generation device according to Embodiment 17 of the present invention; and
FIG. 19 is a schematic diagram of the structure of a photovoltaic power generation system according to Embodiment 18 of the present invention.

### DETAILED DESCRIPTION OF THE EMBODIMENTS

The technical solutions in the embodiments of the present invention will be described clearly and completely below with reference to the drawings in the embodiments of the present invention. Obviously, the described embodiments are preferred embodiments of the present invention and should not be regarded as excluding other embodiments. Based on the embodiments of the present invention, all other embodiments obtained by those having ordinary skill in the art without creative efforts shall fall within the scope of the protection of the present invention.

In the claims, specification and drawings of the present invention, unless otherwise expressly defined, the terms, such as "first", "second", "third" or others, are all intended to distinguish different objects rather than to describe a particular order. In the claims, specification and drawings of the present invention, the terms "include/comprise", "have" and their variants are intended to mean include but not be limited to.

### Embodiment 1

Referring to FIG. 2, according to Embodiment 1 of the present invention, a three-level boost circuit includes an input end and an output end. The input end includes a first input end and a second input end, and the output end includes a first output end and a second output end.

Generally, the boost circuit of the present embodiment may be used in various application scenarios. Therefore, the input end of the boost circuit can be coupled to various power input devices to receive power input from the various power input devices. In each embodiment of the present invention, the application scenario in the field of photovoltaic (PV) power generation is taken as an example for introduction. In this case, the input end of the boost circuit is coupled to the photovoltaic module PV1, which converts light energy into direct-current (DC) electric energy and then inputs the DC electric energy into the boost circuit. In this way, the light energy can be effectively utilized by boosting the voltage. The positive electrode of the photovoltaic module PV1 is connected to the first input end, and the negative electrode of the photovoltaic module PV1 is connected to the second input end. In other embodiments, it is also feasible to exchange the relationship between the first and second input ends of the boost circuit and the positive and negative electrodes of the photovoltaic module.

Additionally, an output capacitor group is arranged between the first output end and the second output end of the present invention, and the output capacitor group includes at least two output capacitors (C2 and C3) connected in series, so that at least one output node is formed between the first output end and the second output end, and the output node is configured as a common point between the output capacitors. In each embodiment and the corresponding drawing of the present invention, taking the three-level boost circuit as an example for introduction, the output capacitor group of the three-level boost circuit includes two output capacitors with an identical capacitance value, so that the voltage of the output node is an intermediate value of the voltage of the first output end and the voltage of the second output end. In other embodiments, the output capacitor group may also include more output capacitors to form a multilevel boost circuit, which can be realized by only adaptively adjusting the parameters of the corresponding devices. It should be recognized that when the three-level boost circuit of the embodiments of the present invention is applied in the field of photovoltaic power generation, the output end is usually called a bus, each output capacitor is called a bus capacitor, and the output node is correspondingly called a bus neutral point.

It should be understood that the present invention is not limited to the above application scenarios in the field of photovoltaic power generation. Therefore, the coupling forms of the input end and the output end are not limited to the forms of each specific embodiment in the specification of the present invention.

In the specific structure of Embodiment 1, the boost circuit further includes the inductor L1, the first controllable switch Q1, the second controllable switch Q2, the first capacitor C1, the first diode D1, the second diode D2, and the first transient voltage suppressor TVS1.

The inductor L1 is configured to circularly store and release electric energy during the working cycle, so that the voltage of the input end is boosted and then output to the output end. Moreover, in Embodiment 1 of the present invention, the devices other than the inductor L1 are correspondingly connected to form a first branch, a second branch, a third branch and a fourth branch as follows.

The first controllable switch Q1 and the second controllable switch Q2 are connected in series to form the first branch, wherein, the first end of the first controllable switch Q1 and the second end of the second controllable switch Q2 constitute the first end and the second end of the first branch, respectively. In the present embodiment, the first controllable switch Q1 and the second controllable switch Q2 may employ a triode, or a field-effect transistor, or an insulated gate bipolar transistor (IGBT). When the triode is employed, the first end of each of the first controllable switch Q1 and the second controllable switch Q2 is the collector, and the second end of each of the first controllable switch Q1 and the second controllable switch Q2 is the emitter. When the field-effect transistor is employed, the first end of each of the first controllable switch Q1 and the second controllable switch Q2 is the drain, and the second end of each of the first controllable switch Q1 and the second controllable switch Q2 is the source. When the IGBT is employed, the first end of each of the first controllable switch Q1 and the second controllable switch Q2 is the collector, and the second end of each of the first controllable switch Q1 and the second controllable switch Q2 is the emitter.

The first diode D1 and the second diode D2 are connected in series to form the second branch, wherein, the anode of the first diode D1 and the cathode of the second diode D2 constitute the first end and the second end of the second branch, respectively.

The first capacitor C1 constitutes the third branch, and both ends of the first capacitor C1 constitute the first end and the second end of the third branch, respectively.

The first transient voltage suppressor TVS1 is configured as a unidirectional transient voltage suppressor, and constitutes the fourth branch. The cathode and the anode of the first transient voltage suppressor TVS1 constitute the first end and the second end of the fourth branch, respectively.

The specific connection relationship of each branch in the boost circuit of Embodiment 1 is described as follows.

Each of the first end of the first branch and the first end of the second branch is connected to the first input end through the inductor L1. The second end of the first branch and the second end of the second branch are connected to the second input end and the first output end, respectively. The second input end is further connected to the second output end.

The first end of the third branch is connected to the common point of the first diode D1 and the second diode D2 in the second branch, and the second end of the third branch is connected to the common point of the first controllable switch Q1 and the second controllable switch Q2 in the first branch. The first end of the fourth branch is connected to the second end of the third branch, and the second end of the fourth branch is connected to the bus neutral point NE.

After the boost circuit of the present embodiment is formed through the above connection, each branch mainly realizes the following function.

The first branch including the controllable switches is configured to control the on-off of each loop in the boost circuit during the normal operation, so that the inductor L1 is correspondingly in a state of storing and releasing the electric energy, thereby completing the boosting process. In the present embodiment, the first controllable switch Q1 and the second controllable switch Q2 are various transistors to quickly and conveniently control the on-off thereof by electronic signals.

The first end and the second end of the second branch point to the input end and the output end, respectively, and the common point of the two diodes in the second branch is connected to the third branch including a capacitor. The second branch is configured to form a unidirectional conduction characteristic of the current between the corresponding devices, thereby preventing the electric energy from returning to the input end and avoiding power loss.

The first capacitor C1 in the third branch is a flying capacitor and configured to store and release the electrical energy during the normal operation, and also boost the input voltage. During the normal operation, due to the capacity selection of the first capacitor C1, its voltage value is basically maintained near the half-bus voltage, but still fluctuates because of its charge and discharge processes.

The fourth branch is configured to establish the charging loop of the first capacitor C1 when the boost circuit is powered on, so as to protect the second controllable switch Q2 from being broken down. Moreover, the transient voltage suppressor used in the fourth branch can further ensure that the fourth branch does not consume electric power when the boost circuit is working normally. The working principle of the transient voltage suppressor will be described in detail below.

The specific working process and principle that the boost circuit of the present invention boosts the input voltage during the normal operation is the common knowledge for those skilled in the art, which is not repeated herein. The following description illustrates how the second controllable switch Q2 can be prevented from being broken down at the power-on moment, and how the voltage of the bus capacitor is evenly divided during the normal operation of the boost circuit.

Specifically, at the power-on moment, the first controllable switch Q1 and the second controllable switch Q2 are switched off, and the voltage of the first capacitor C1 is zero. Since the input voltage is as high as 1500 V, when the clamp voltage of the first transient voltage suppressor TVS1 is selected at an appropriate value, two loops are formed in the boost circuit. The first loop with the input end, the inductor L1, the first diode D1 and the second diode D2 forms a charging loop for charging the two bus capacitors. The second loop with the input end, the inductor L1, the first diode D1, the first capacitor C1, the first transient voltage suppressor TVS1 and the bus capacitor C3 forms a charging loop for charging the first capacitor C1 and the bus capacitor C3. Since the capacities of the two bus capacitors are equal, after a certain period of time, the first capacitor C1 and the two bus capacitors are separately charged to half of the input voltage. At this time, the voltage of the point A (the second end of the third branch and the first end of the fourth branch) in the figure is basically stabilized at half of the input voltage, that is, the voltage across the first controllable switch Q1 and the voltage across the second controllable switch Q2 are both half of the input voltage. Therefore, when the first controllable switch Q1 and the second controllable switch Q2 are selected, it is basically necessary to only employ the device with a withstanding voltage slightly higher than half of the input voltage. In the case that the input voltage of the present embodiment reaches 1500 V, the withstanding voltage is about 800-900 V, which meets the cost requirements for device selection.

The voltage at both ends of the first capacitor C1 are basically maintained near the half-bus voltage during the normal operation, and the maximum voltage of the point A is merely slightly higher than the half-bus voltage. Thus, when the clamp voltage of the first transient voltage suppressor TVS1 is selected at an appropriate value, it can ensure that the portion from the point A to the bus neutral point NE is not conducted, and the voltage of the point A is not transferred to the bus neutral point NE through the first transient voltage suppressor TVS1, thereby avoiding affecting the even voltage of the bus capacitor. In Embodiment 1, the range of the clamp voltage of the first transient voltage suppressor TVS1 is about 100 V. At the power-on moment, the fourth branch is conducted from the first end to the second end of the fourth branch, while during the normal operation, the fourth branch cannot be conducted from the first end to the second end of the fourth branch.

Therefore, according to Embodiment 1 of the present invention, by arranging the first transient voltage suppressor TVS1 on the fourth branch, the present invention not only prevents the second controllable switch Q2 from being broken down at the power-on moment, but also ensures that the fourth branch does not affect the normal operation of the boost circuit, so that the even voltage of each bus capacitor can be easily controlled.

### Embodiments 2-6

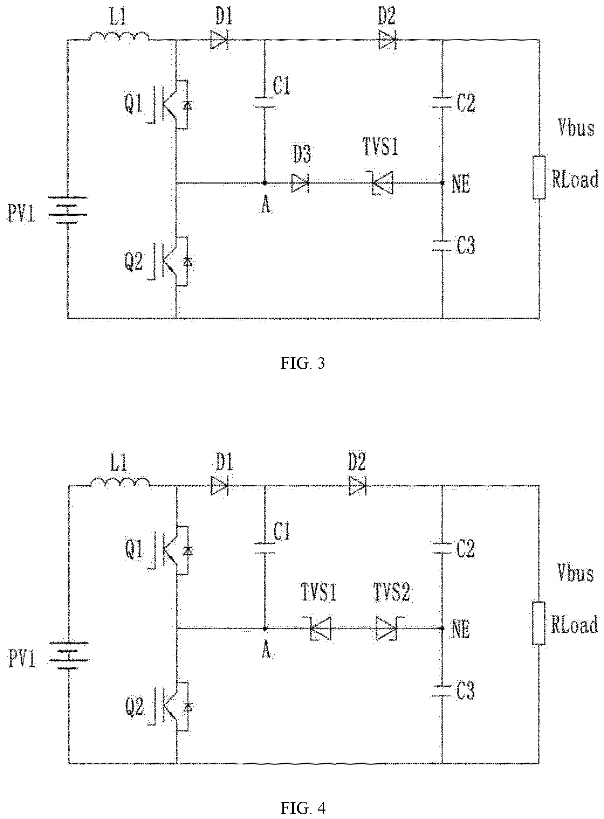

Referring to FIGS. 3-7, FIGS. 3-7 correspond to Embodiments 2-6 of the present invention, respectively, and Embodiments 2-6 are separately improved on the basis of Embodiment 1, aimed at solving the following problem: after the first transient voltage suppressor TVS1 configured as a unidirectional transient voltage suppressor is introduced in Embodiment 1, since the first transient voltage suppressor TVS1 is equivalent to an ordinary diode when working in the forward direction, in the case of low input voltage, the voltage of the bus neutral point is transferred to the input end through the first transient voltage suppressor TVS1 and the body diode of the first controllable switch Q1, which easily causes an electric shock.

In Embodiment 2 shown in FIG. 3, the fourth branch is further provided with the third diode D3. The cathode of the third diode D3 is connected to the cathode of the first transient voltage suppressor TVS1, and the anode of the third diode D3 constitutes the first end of the fourth branch. In the case of low input voltage, the voltage of the bus neutral point cannot be transferred to the point A due to the reverse blocking of the third diode D3, and thus cannot be transferred to the input end through the body diode of the first controllable switch Q1, thereby solving the above problem. Moreover, when the input voltage is 1500 V, since the voltage of the bus neutral point is 750 V, the withstanding voltage of the third diode D3 is only required to be greater than 750 V, so that it is easy to select the type thereof and the cost is reduced as a result.

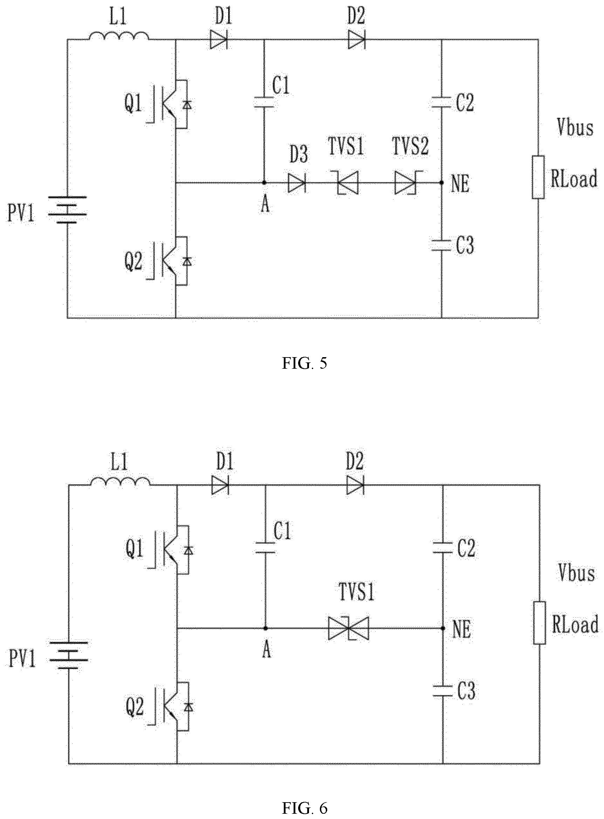

In Embodiment 3 shown in FIG. 4, the fourth branch is further provided with the second transient voltage suppressor TVS2 which is also configured as a unidirectional transient voltage suppressor. The anode of the second transient voltage suppressor TVS2 is connected to the anode of the first transient voltage suppressor TVS1, and the cathode of the second transient voltage suppressor TVS2 constitutes the second end of the fourth branch. Each of the first transient voltage suppressor TVS1 and the second transient voltage suppressor TVS2 is a unidirectional transient voltage suppressor. In the case of low input voltage, the fourth branch can be conducted only when the voltage of the bus neutral point is higher than the clamp voltage of the second transient voltage suppressor TVS2. Therefore, when the clamp voltage of the second transient voltage suppressor TVS2 is selected to be higher than the voltage of the bus neutral point, the voltage of the bus neutral point cannot be transferred to the input end, thus solving the above problem. However, when the clamp voltage of the second transient voltage suppressor TVS2 cannot be selected to be higher than the voltage of the bus neutral point for some reasons, in order to better solve the above problem, the fourth branch may further be provided with a current limiting resistor, or be preferably provided with the third diode D3 in the same form as Embodiment 2 to form Embodiment 4 shown in FIG. 5.

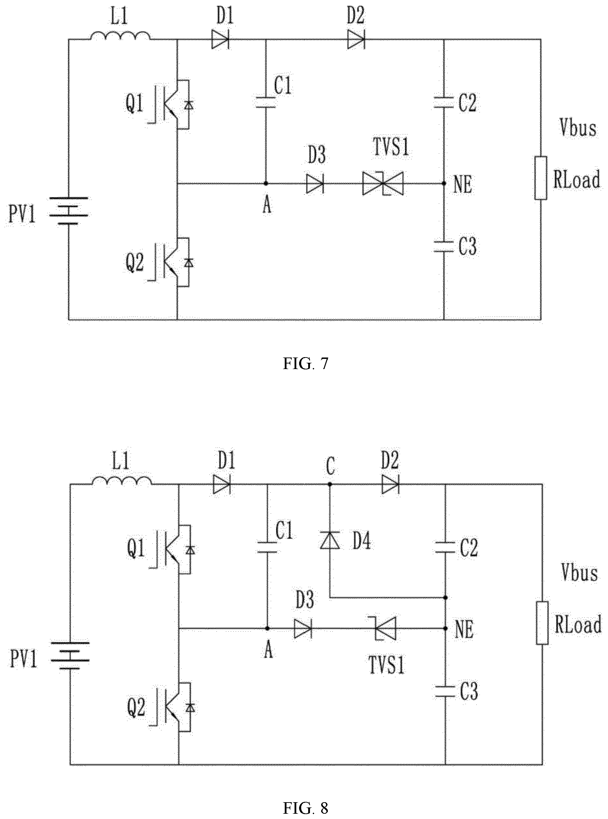

In Embodiment 5 shown in FIG. 6, the first transient voltage suppressor TVS1 of the fourth branch is directly configured as a bidirectional transient voltage suppressor, and both ends of the bidirectional transient voltage suppressor constitute the first end and the second end of the fourth branch, respectively. The principle of Embodiment 5 to solve the above problem is the same as that of Embodiment 3, but has the shortcoming that it is inconvenient to select the clamp voltage parameter in the process of designing the circuit since the bidirectional clamp voltage parameters of the bidirectional transient voltage suppressor are identical. In this regard, when the bidirectional clamp voltages of the bidirectional transient voltage suppressor cannot be selected to be higher than the voltage of the bus neutral point for some reasons, the fourth branch may further be provided with a current limiting resistor, or be preferably provided with the third diode D3 in the same form as Embodiment 2 to form Embodiment 6 shown in FIG. 7.

It should be explained that in Embodiments 2-6, the fourth branch still has the characteristics of the first transient voltage suppressor TVS1 in Embodiment 1, and thus does not affect the even voltage of the bus capacitor during the normal operation of the boost circuit.

### Embodiments 7-8

Referring to FIGS. 8-9, FIGS. 8-9 correspond to Embodiments 7-8 of the present invention, respectively, and Embodiments 7-8 are separately improved on the basis of Embodiment 2 shown in FIG. 3, aimed to solve the problem that the second diode D2 is easily broken down in the case of low input voltage.

It can be seen that the boost circuit further includes a fifth branch, and the fourth diode D4 is arranged on the fifth branch. The fifth branch is configured to clamp the voltage of the common point of the first diode D1 and the second diode D2 when the input voltage between the first input end and the second input end is lower than the starting voltage of the boost circuit, that is, in the case of low input voltage.

One end of the fifth branch is connected to the common point of the first diode D1 and the second diode D2, and the other end of the fifth branch may be connected to the second end of the fourth branch, or the common point of the first transient voltage suppressor TVS1 and the third diode D3.

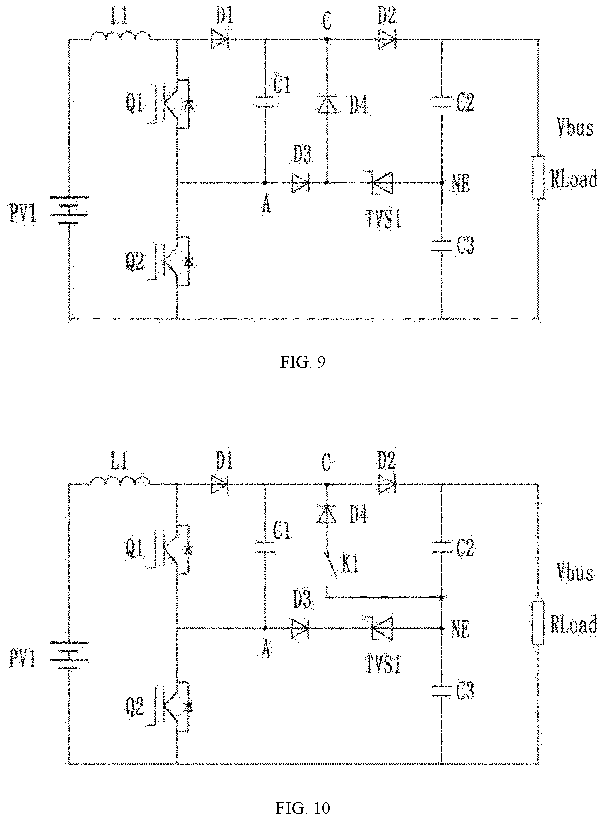

In Embodiments 7 and 8 shown in FIGS. 8 and 9, respectively, in the case of low input voltage, the voltage of the bus neutral point is loaded to the point C (the anode of the second diode D2) in the figures through the fourth diode D4 to clamp the voltage at both ends of the second diode D2 at the half-bus voltage, thereby protecting the second diode D2 from being broken down, which facilitates its low-cost selection.

However, the above embodiments still have the problem that during the normal operation of the boost circuit, when the lower-arm switch Q2 is switched on and the flying capacitor is in the charging cycle, the half-bus voltage charges the flying capacitor through the fifth branch, which leads to the uneven voltage of the bus capacitors. Moreover, a sudden change of the charging current easily damages the fourth diode D4. Due to the existence of the abnormal charging loop, the voltage of the flying capacitor C1 will deviate from the set value and is difficult to control.

### Embodiments 9-10

Referring to FIGS. 10-11, FIGS. 10-11 correspond to Embodiments 9-10 of the present invention, respectively, and Embodiments 9-10 are improved on the basis of Embodiment 7 shown in FIG. 8 and Embodiment 8 shown in FIG. 9, respectively, aimed at solving the problem of the uneven voltage of the bus capacitors during the normal operation due to the fourth diode D4 of the fifth branch.

The fifth branch is further provided with the third controllable switch K1, and the third controllable switch K1 is connected in series with the fourth diode D4. The third controllable switch K1 may employ a relay, a contactor, a triode or other devices. Preferably, the third controllable switch K1 employs a normally closed relay. Correspondingly, the boost circuit further includes a controller. The controller is configured to control the third controllable switch K1 to be switched off during the normal operation of the boost circuit, that is, when the input voltage between the first input end and the second input end is higher than the starting voltage of the boost circuit.

During the normal operation of the boost circuit, the third controllable switch K1 is switched off, that is, the fifth branch is not conducted, so that the normal operation of the boost circuit is not affected. Thus, there is no problem of the uneven voltage of the bus capacitors. When the boost circuit has a low input voltage, the third controllable switch K1 is switched on, and the voltage of the bus neutral point is loaded to the point C (the anode of the second diode D2) in the figures through the third controllable switch K1 and the fourth diode D4 to clamp the voltage at both ends of the second diode D2 at the half-bus voltage, thereby protecting the second diode D2 from being broken down, which facilitates its low-cost selection.

It should be recognized that during the normal operation, the voltage of the point C may be higher than the voltage of the bus neutral point, and when the third controllable switch K1 employs a relay, since the withstanding voltage of the conventional relay is not high, the fourth diode D4 in Embodiment 9 and Embodiment 10 is further configured to block the voltage of the point C in the fifth branch from being transferred to the bus neutral point NE, thereby further ensuring that the voltage of the bus capacitor is evenly divided during the normal operation of the boost circuit and protecting the safety of the relay.

### Embodiments 11-12

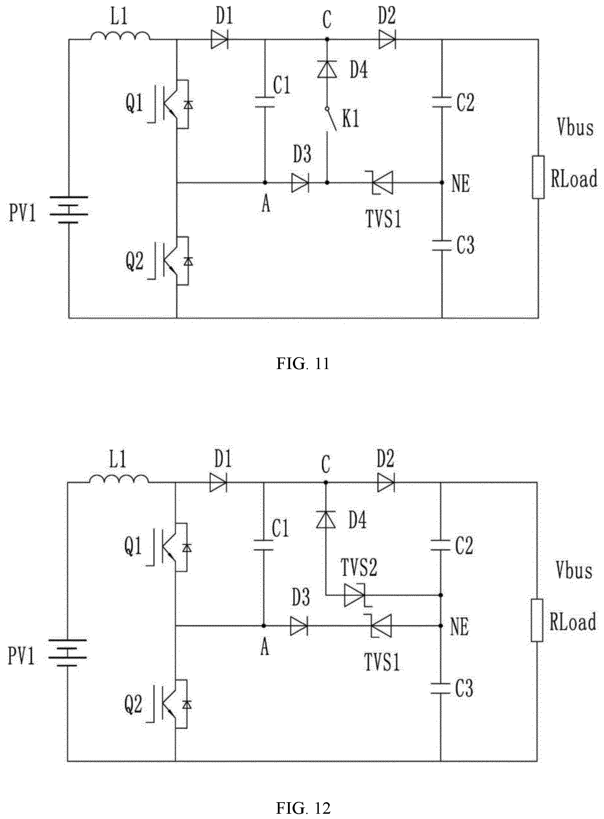

Referring to FIGS. 12-13, FIGS. 12-13 correspond to Embodiments 11-12 of the present invention, respectively, and Embodiments 11-12 are improved on the basis of Embodiment 7 shown in FIG. 8 and Embodiment 8 shown in FIG. 9, respectively, aimed at solving the problem of the uneven voltage of the bus capacitors during the normal operation due to the fourth diode D4 of the fifth branch.

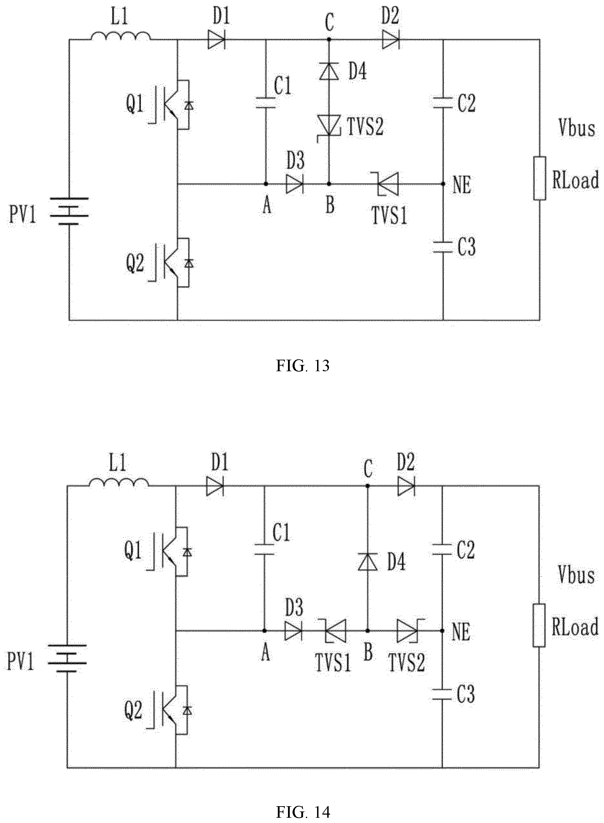

In Embodiment 11 shown in FIG. 12, the fifth branch is further provided with the second transient voltage suppressor TVS2. The anode of the second transient voltage suppressor TVS2 is connected to the anode of the fourth diode D4, and the cathode of the second transient voltage suppressor TVS2 is connected to the second end of the fourth branch, i.e. the bus neutral point NE. In Embodiment 12 shown in FIG. 13, the fifth branch is further provided with the second transient voltage suppressor TVS2. The anode of the second transient voltage suppressor TVS2 is connected to the anode of the fourth diode D4, the cathode of the second transient voltage suppressor TVS2 is connected to the common point of the first transient voltage suppressor TVS1 and the third diode D3.

In Embodiments 11 and 12, in the case of low input voltage, the clamp voltage of the second transient voltage suppressor TVS2 is selected at an appropriate value to enable the second transient voltage suppressor TVS2 to be reversely conducted, so that the fifth branch can be conducted from the bus neutral point NE to the point C and clamp the voltage of the point C at an appropriate voltage value. In this way, the voltage at both ends of the second diode D2 are ensured to be lower than the withstanding voltage of the second diode D2. Therefore, at a conventional cost, the second diode D2 can still be guaranteed not to be broken down, which is convenient for its low-cost selection.

Since the withstanding voltage of the second diode D2 is generally selected as 1200 V in the case that the input voltage reaches 1500 V, the clamp voltage of the second transient voltage suppressor TVS2 is generally selected to be about 300 V in Embodiments 11 and 12. When the bus voltage is 1500 V, the voltage of the bus neutral point is 750 V, then the voltage of the point C is about 450 V, and the difference between the voltage at both ends of the second diode D2 is about 1050 V, so that the second diode D2 can still be guaranteed not to be broken down at the conventional cost. Obviously, in this case, the clamp voltage of the second transient voltage suppressor TVS2 is not allowed to be higher than 450 V, otherwise the second diode D2 is impossible to be protected through the fifth branch in the case of low input voltage when the withstanding voltage of the second diode D2 is selected as 1200 V.

Additionally, since the second transient voltage suppressor TVS2 when being reversely conducted is capable of dividing the voltage, the voltage of the bus neutral point after passing through the second transient voltage suppressor TVS2 will produce a voltage drop corresponding to the clamp voltage of the second transient voltage suppressor TVS2, so that the voltage of the point C can be controlled to be lower than the voltage of the bus neutral point, which provides a low-voltage environment for avoiding an electric shock at the input end.

During the normal operation, due to the existence of the second transient voltage suppressor TVS2, only when the voltage of the bus neutral point minus the voltage of the point C is equal to the clamp voltage of the second transient voltage suppressor TVS2, the fifth branch can be conducted from the bus neutral point NE to the point C. However, during the normal operation, the first capacitor C1 is in a periodic charge-discharge process, which enables the voltage of the point C to generally fluctuate between the half-bus voltage and the bus voltage, and the voltage of the point C after the first capacitor C1 discharges is slightly lower than the half-bus voltage. Therefore, during the normal operation, as long as the clamp voltage of the second transient voltage suppressor TVS2 is selected at an appropriate value, the voltage of the bus neutral point cannot be transferred to the point C, and the first capacitor C1 is also not be charged by the point C when the voltage of the point C is slightly lower than the voltage of the bus neutral point, thereby solving the problem of the uneven voltage of the bus capacitors due to the introduction of the fifth branch. In Embodiments 11 and 12, the clamp voltage of the second transient voltage suppressor TVS2 is generally selected to be about 300 V, which meets the requirement that the second transient voltage suppressor TVS2 blocks the voltage of the bus neutral point from being transferred to the point C during the normal operation.

It should be recognized that since the voltage of the point C may be higher than the voltage of the bus neutral point during the normal operation, the fourth diode D4 in Embodiment 11 and Embodiment 12 is further configured to block the voltage of the point C in the fifth branch from being transferred to the bus neutral point NE, thereby further ensuring that the voltage of the bus capacitor is evenly divided during the normal operation of the boost circuit.

### Embodiments 13-14

Referring to FIGS. 14-15, FIGS. 14-15 correspond to Embodiments 13-14 of the present invention, respectively, and Embodiments 13-14 are improved on the basis of Embodiment 4 shown in FIG. 5 and Embodiment 6 shown in FIG. 7, respectively. Embodiment 4 shown in FIG. 5 introduces the second transient voltage suppressor TVS2 and Embodiment 6 shown in FIG. 7 introduces the first transient voltage suppressor TVS1 configured as a bidirectional transient voltage suppressor. On this basis, an improved solution is directly presented, which not only solves the problem that the second diode D2 is easily broken down in the case of low input voltage, but also simultaneously solves the problem of the uneven voltage of the bus capacitors caused by the previous problem.

In Embodiment 13 shown in FIG. 14, the boost circuit further includes a fifth branch, and the fourth diode D4 is arranged on the fifth branch. The fifth branch is configured to clamp the voltage of the common point of the first diode D1 and the second diode D2 when the input voltage between the first input end and the second input end is lower than the starting voltage of the boost circuit. One end of the fifth branch is connected to the common point of the first diode D1 and the second diode D2, and the other end of the fifth branch is connected to the common point of the first transient voltage suppressor TVS1 and the second transient voltage suppressor TVS2 in the fourth branch.

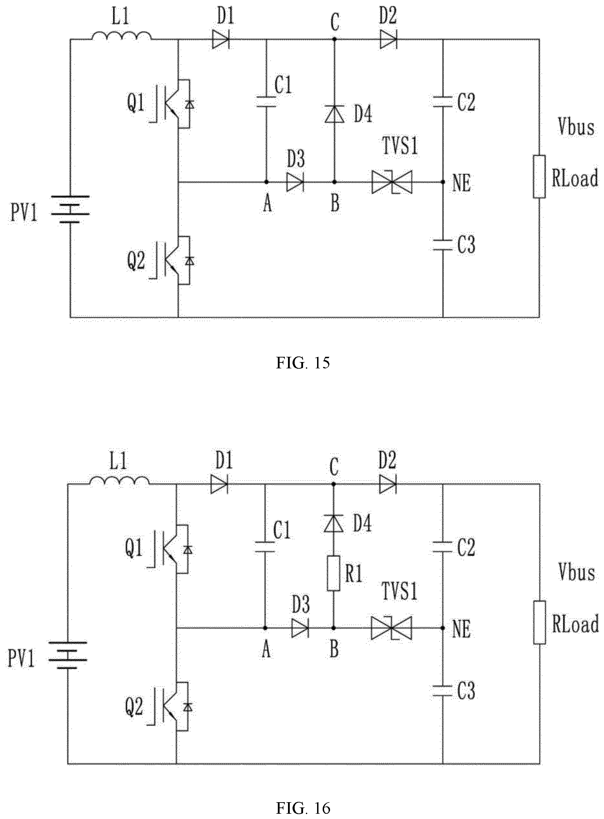

In Embodiment 14 shown in FIG. 15, the boost circuit further includes a fifth branch, and the fourth diode D4 is arranged on the fifth branch. The fifth branch is configured to clamp the voltage of the common point of the first diode D1 and the second diode D2 when the input voltage between the first input end and the second input end is lower than the starting voltage of the boost circuit. One end of the fifth branch is connected to the common point of the first diode D1 and the second diode D2, and the other end of the fifth branch is connected to the common point of the first transient voltage suppressor TVS1 and the third diode D3.

Since the fourth branch in Embodiment 13 is already provided with the second transient voltage suppressor TVS2 and the first transient voltage suppressor TVS1 of the fourth branch in embodiment 14 is a bidirectional transient voltage suppressor, the principle of simultaneously solving the problem of breakdown of the second diode D2 and the problem of the uneven voltage of the bus capacitors during the normal operation due to the introduction of the fourth diode D4 of the fifth branch is the same as that of Embodiments 11 and 12, which is not repeated herein.

It should be noted that in Embodiment 13, the clamp voltage of the second transient voltage suppressor TVS2 is selected to be about 300 V, while in Embodiment 14, the bidirectional clamp voltage of the second transient voltage suppressor TVS2 configured as a bidirectional transient voltage suppressor is also selected to be about 300 V. In view of this, in Embodiments 3 and 5, in order to simultaneously solve the problems mainly solved by Embodiments 13 and14, the corresponding clamp voltage cannot be selected to be higher than the voltage of the bus neutral point, otherwise the fifth branch will not be capable of protecting the second diode D2 in the case of low input voltage.

It can be seen that in Embodiment 13, the second transient voltage suppressor TVS2 of the fourth branch can block the voltage of the bus neutral point from being transferred to the point A, and enable the point C to divide the voltage of the bus neutral point. Thus, the second transient voltage suppressor TVS2 of the fourth branch plays a corresponding role in isolation or voltage protection. With the aid of the second transient voltage suppressor TVS2, the boost circuit of the present invention can solve the problem of breakdown of the second controllable switch Q2 at the power-on moment, the problem of breakdown of the second diode D2 in the case of low input voltage and the problem of even voltage of the bus capacitor during normal operation.

In Embodiment 14, when the bidirectional clamp voltage parameters meet the specific application requirements, the bidirectional transient voltage suppressor is directly configured to block the voltage of the output node from being transferred to the second end of the third branch2, and enable the anode of the second diode D2 to divide the voltage of the output node. Thus, the bidirectional transient voltage suppressor plays a corresponding role in isolation or voltage protection. Therefore, the bidirectional transient voltage suppressor simultaneously solves the problems of breakdown of the second controllable switch Q2 at the power-on moment and breakdown of the second diode D2 in the case of low input voltage, to meet the cost requirements for type selection. Additionally, the devices of the newly introduced fourth and fifth branches will not affect the even voltage of the bus capacitor during the normal operation.

### Embodiment 15

Referring to FIG. 16, FIG. 16 corresponds to Embodiment 15 of the present invention, and Embodiment 15 is improved on the basis of Embodiment 14 shown in FIG. 15. As in Embodiments 11-12, in Embodiment 14, the voltage of the point C in the case of low input voltage is decreased and stabilized at about 450 V, which provides a low-voltage environment at the point C, but the voltage of the point C is still transferred to the input end through the first capacitor C1 and the body diode of the first controllable switch Q1, and an electric shock may still occur if the resistance of the input end is not large enough. In order to make the operation of the input end safer, the fifth branch is further provided with the current limiting resistor R1, and the current limiting resistor R1 is connected in series with the fourth diode D4 to limit the current in a safe range and reduce the probability of electric shock at the input end.

It should be understood that the current limiting resistor R1 of the present embodiment may be introduced to any fifth branch in Embodiments 7-13 to achieve the same effect, especially in Embodiments 11, 12 and 13 where a low-voltage environment is provided at the point C to obtain an optimal effect.

### Embodiments 16-18

The specific applications of the above multilevel boost circuits are introduced below through Embodiments 16-18. Obviously, the specific applications are not limited to these embodiments.

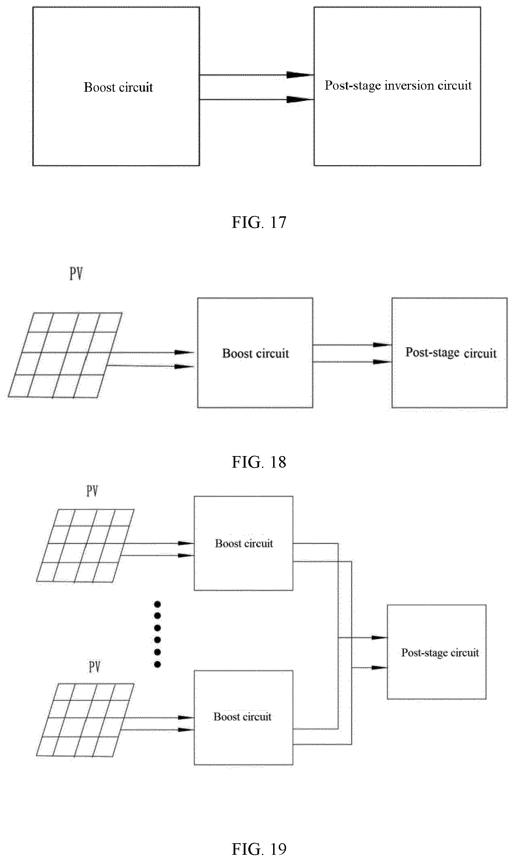

Referring to FIG. 17, Embodiment 16 of the present invention provides an inversion device, including a front-stage circuit and a post-stage inversion circuit. The front-stage circuit employs the multilevel boost circuit mentioned in the above technical solutions.

The multilevel boost circuit is configured to boost the voltage input from the input end of the multilevel boost circuit and then output the voltage via the output end of the multilevel boost circuit. The input end of the inversion circuit is coupled to the output end of the multilevel boost circuit for inverting a direct current output from the output end of the multilevel boost circuit into an alternating current.

Referring to FIG. 18, Embodiment 17 of the present invention provides a photovoltaic power generation device, including the photovoltaic module PV, a front-stage circuit and a post-stage circuit. The front-stage circuit employs the multilevel boost circuit mentioned in the above technical solutions.

The photovoltaic module PV is in a one-to-one correspondence with the multilevel boost circuit and is coupled to the input end of the multilevel boost circuit. The multilevel boost circuit is configured to boost the voltage output from the photovoltaic module PV and then output the voltage via the output end of the multilevel boost circuit to the post-stage circuit.

Referring to FIG. 19, Embodiment 18 of the present invention provides a photovoltaic power generation system, including at least two photovoltaic power generation devices as provided in Embodiment 17. Specifically, the output ends of the front-stage circuits of a plurality of photovoltaic power generation devices are connected in parallel and then connected to the post-stage circuit to form a distributed photovoltaic power generation system.

Each of the device and system of Embodiments 16-18 adopts the multilevel boost circuits of the aforementioned embodiments and thus has all the advantages of the boost circuits of the aforementioned embodiments.

The description of the above specification and embodiment is used to explain the scope of protection of the present invention, but does not constitute a limitation to the scope of protection of the present invention. Through the enlightenment of the present invention or the above embodiments, those having ordinary skill in the art may combine the common knowledge, common technical knowledge in the art and/or the prior art to make modifications, equivalent replacements or other improvements to the embodiments or part of the technical features of the present invention through logical analysis, reasoning or limited experiments, and these modifications, equivalent replacements or improvements shall fall within the scope of protection of the present invention.

## Claims

1. A multilevel boost circuit, comprising a first input end, a second input end, a first output end, a second output end, an inductor, a first controllable switch, a second controllable switch, a first capacitor, a first diode, a second diode, an output capacitor group, and a first transient voltage suppressor; **characterized in that**,
the first controllable switch and the second controllable switch are connected in series to form a first branch, wherein, a first end of the first controllable switch and a second end of the second controllable switch constitute a first end and a second end of the first branch, respectively;
the first diode and the second diode are connected in series to form a second branch, wherein, an anode of the first diode and a cathode of the second diode constitute a first end and a second end of the second branch, respectively;
the first capacitor constitutes a third branch, and both ends of the first capacitor constitute a first end and a second end of the third branch, respectively;
the first transient voltage suppressor constitutes a fourth branch; a cathode and an anode of the first transient voltage suppressor constitute a first end and a second end of the fourth branch, respectively;
the output capacitor group is connected between the first output end and the second output end, and the output capacitor group comprises at least two output capacitors connected in series to form at least one output node configured as a common point between the output capacitors;
each of the first end of the first branch and the first end of the second branch is connected to the first input end through the inductor; the second end of the first branch and the second end of the second branch are connected to the second input end and the first output end, respectively; the second input end is further connected to the second output end; and
the first end of the third branch is connected to a common point of the first diode and the second diode in the second branch, and the second end of the third branch is connected to a common point of the first controllable switch and the second controllable switch in the first branch; the first end of the fourth branch is connected to the second end of the third branch, and the second end of the fourth branch is connected to one output node.

2. The multilevel boost circuit of claim 1, **characterized in that**, the first transient voltage suppressor is a unidirectional transient voltage suppressor; and
the fourth branch is further provided with a third diode; a cathode of the third diode is connected to the cathode of the first transient voltage suppressor, and an anode of the third diode constitutes the first end of the fourth branch.

3. The multilevel boost circuit of claim 1, **characterized in that**, the fourth branch is further provided with a second transient voltage suppressor; an anode of the second transient voltage suppressor is connected to the anode of the first transient voltage suppressor, and a cathode of the second transient voltage suppressor constitutes the second end of the fourth branch; and
each of the first transient voltage suppressor and the second transient voltage suppressor is a unidirectional transient voltage suppressor.

4. The multilevel boost circuit of claim 1, **characterized in that**, the first transient voltage suppressor is a bidirectional transient voltage suppressor, and both ends of the bidirectional transient voltage suppressor constitute the first end and the second end of the fourth branch, respectively.

5. The multilevel boost circuit of claim 2, further comprising a fifth branch, **characterized in that**, a fourth diode is arranged on the fifth branch; the fifth branch is configured to clamp a voltage of the common point of the first diode and the second diode when an input voltage between the first input end and the second input end is lower than a starting voltage of the boost circuit; and
a cathode of the fourth diode is connected to the common point of the first diode and the second diode, and an anode of the fourth diode is connected to the second end of the fourth branch or a common point of the first transient voltage suppressor and the third diode.

6. The multilevel boost circuit of claim 5, **characterized in that**, the fifth branch is further provided with a second transient voltage suppressor or a third controllable switch;
when the fifth branch is provided with the second transient voltage suppressor, an anode of the second transient voltage suppressor is connected to the anode of the fourth diode, and a cathode of the second transient voltage suppressor is connected to the second end of the fourth branch or the common point of the first transient voltage suppressor and the third diode; and
when the fifth branch is provided with the third controllable switch, the third controllable switch is a normally closed relay, and the circuit further comprises a controller, wherein the controller is configured to control the third controllable switch to be switched off during a normal operation of the circuit.

7. The multilevel boost circuit of claim 3, **characterized in that**, the fourth branch is further provided with a third diode; a cathode of the third diode is connected to the cathode of the first transient voltage suppressor, and an anode of the third diode constitutes the first end of the fourth branch;
the circuit further comprises a fifth branch, and a fourth diode is arranged on the fifth branch; the fifth branch is configured to clamp a voltage of the common point of the first diode and the second diode when an input voltage between the first input end and the second input end is lower than a starting voltage of the boost circuit; and
a cathode of the fourth diode is connected to the common point of the first diode and the second diode, and an anode of the fourth diode is connected to a common point of the first transient voltage suppressor and the second transient voltage suppressor.

8. The multilevel boost circuit of claim 4, **characterized in that**, the fourth branch is further provided with a third diode; a cathode of the third diode is connected to one end of the first transient voltage suppressor, and an anode of the third diode constitutes the first end of the fourth branch;
the circuit further comprises a fifth branch, and a fourth diode is arranged on the fifth branch; the fifth branch is configured to clamp a voltage of the common point of the first diode and the second diode when an input voltage between the first input end and the second input end is lower than a starting voltage of the boost circuit; and
a cathode of the fourth diode is connected to the common point of the first diode and the second diode, and an anode of the fourth diode is connected to a common point of the first transient voltage suppressor and the third diode.

9. The multilevel boost circuit of any one of claims 5-8, **characterized in that**, the fifth branch is further provided with a current limiting resistor, and the current limiting resistor is connected in series with the fourth diode.

10. The multilevel boost circuit of any one of claims 1-8, **characterized in that**, the output capacitor group comprises two output capacitors with an identical capacitance value.

11. An inversion device, comprising a post-stage inversion circuit and a front-stage circuit, **characterized in that**, the front-stage circuit employs the multilevel boost circuit of any one of claims 1-10;
the multilevel boost circuit is configured to boost a voltage input from the input end of the multilevel boost circuit and then output the voltage via the output end of the multilevel boost circuit; and
an input end of the inversion circuit is coupled to the output end of the multilevel boost circuit for inverting a direct current output from the output end of the multilevel boost circuit into an alternating current.

12. A photovoltaic power generation device, comprising a photovoltaic module, a front-stage circuit and a post-stage circuit, **characterized in that**, the front-stage circuit employs the multilevel boost circuit of any one of claims 1-10;
the photovoltaic module is in a one-to-one correspondence with the multilevel boost circuit and is coupled to the input end of the multilevel boost circuit; the multilevel boost circuit is configured to boost a voltage output from the photovoltaic module and then output the voltage via the output end of the multilevel boost circuit to the post-stage circuit.

13. A photovoltaic power generation system, comprising at least two photovoltaic power generation devices of claim 12, **characterized in that**, output ends of front-stage circuits of a plurality of photovoltaic power generation devices are connected in parallel and then connected to the post-stage circuit.
